# EUROPÄISCHE PATENTSCHRIFT

(11) **EP 0 530 797 B1**
(45) Veröffentlichungstag und Bekanntmachung des Hinweises auf die Patenterteilung: **28.12.1994**
(21) Anmeldenummer: 92115069.4
(22) Anmeldetag: 03.09.1992
(51) Int. Cl.: G01G 11/08

(54) **Gravimetrische Dosiervorrichtung für Schüttgüter**
Gravimetric dosing device for bulk materials
Dispositif pour le dosage de matériaux en vrac

(30) Priorität: 06.09.1991 DE 4129618
(43) Veröffentlichungstag der Anmeldung: 10.03.1993
(73) Patentinhaber: Pfister GmbH, 86165 Augsburg (DE)
(72) Erfinder: Häfner, Hans Wilhelm, W-8890 Aichach-Walchshofen (DE)
(74) Vertreter: Fiener, Josef

(56) Entgegenhaltungen:
- EP-A- 0 198 956
- WO-A-92/03707
- GB-A- 2 127 566

## Beschreibung

Die Erfindung betrifft eine gravimetrische Dosiervorrichtung für Schüttgüter gemäß dem Oberbegriff des Patentanspruches 1.

Aus der DE-C-32 17 406 ist eine Vorrichtung zum kontinuierlichen gravimetrischen Dosieren von schüttfähigem Gut bekannt, das über eine Aufgabeöffnung in Taschen eines in einem Gehäuse angeordneten, um eine vertikale Achse drehbaren Rotors geleitet und unter Zuführen von Druckluft über eine zur Aufgabeöffnung in Drehrichtung des Rotors versetzte Entleerungsöffnung entfernt wird. Das Gehäuse ist schwenkbar um eine im wesentlichen horizontale Achse gelagert und mit einer entfernt von dieser Achse angeordneten Kraftmeßvorrichtung verbunden, und an der Aufgabeöffnung und der Entleerungsöffnung ist je ein elastisches Anschlußglied vorgesehen. Die horizontale Achse verläuft dabei durch die Mitten der elastischen Anschlußglieder, so daß Kräfte, die durch Verwindungen bei der Belastung der Dosiervorrichtung auftreten könnten, unwirksam sind.

Mit einer derartigen Dosiervorrichtung läßt sich eine verhältnismäßig hohe Genauigkeit erzielen, sie ist jedoch relativ bauaufwendig. Zudem kann es bei Schüttgut mit hoher Feuchtigkeit oder bei klebrigem Schüttgut zu Brückenbildungen in den Taschen des Rotors kommen, was unter ungünstigen Bedingungen zu einer unzureichenden Austragung des Schüttguts und damit zu Verfälschungen der Meßwerte führen kann.

Demzufolge liegt der Erfindung die Aufgabe zugrunde, eine gravimetrische Dosiervorrichtung mit einfachem Aufbau und hoher Meßgenauigkeit anzugeben.

Diese Aufgabe wird erfindungsgemäß gelöst mit einer gravimetrischen Dosiervorrichtung mit den Merkmalen des Anspruchs 1.

Durch die Ausbildung des Rotors als Meßteller läßt sich dieser bei ausgezeichneter Meßgenauigkeit bedeutend einfacher herstellen. Die Meßgenauigkeit läßt sich dadurch steigern, daß gemäß einer bevorzugten Weiterbildung auch eine Tarabestimmung vorgenommen wird.

Bevorzugte Weiterbildungen der erfindungsgemäßen gravimetrischen Dosiervorrichtung sind in den Unteransprüchen gekennzeichnet.

Weitere Merkmale und Vorteile der erfindungsgemäßen Vorrichtung ergeben sich aus der nachfolgenden Beschreibung von Ausführungsbeispielen anhand der Zeichnungen. Es zeigen:
- Fig. 1: eine schematische Seitenansicht eines ersten Ausführungsbeispiels der erfindungsgemäßen Vorrichtung;
- Fig. 2: eine Draufsicht auf die Vorrichtung nach Fig. 1;
- Fig. 3: die Vorrichtung nach Fig. 1 mit einer ersten Modifizierung;
- Fig. 4: die Vorrichtung nach Fig. 1 mit weiteren Modifizierungen;
- Fig. 5: die Vorrichtung nach Fig. 1 in bevorzugter Weiterbildung;
- Fig. 6 bis 10: verschiedene Ausführungsformen für die Massenerfassung in Anwendung auf eine der Vorrichtungen gemäß den Fig. 1 bis 5;
- Fig. 11: eine Ansicht von unten einer zweiten Ausführungsform einer erfindungsgemäßen Vorrichtung;
- Fig. 12 bis 16: verschiedene Ausführungsformen für die Anordnung der Kraftmeßzellen und der Krafteinleitung dazu in Anwendung auf die Ausführungsformen nach den Fig. 1 bis 11;
- Fig. 17: eine schematische Ansicht von unten auf eine dritte Ausführungsform der erfindungsgemäßen Vorrichtung;
- Fig. 18 und 19: schematische Vertikalschnitte der Ausführungsform nach Fig. 17;
- Fig. 20: Modifikationen der Entleerung und Massebestimmung;
- Fig. 21 und 22: Einzelheiten über die Ausgestaltung der Übergänge zwischen den einzelnen Dosiersektoren;
- Fig. 23: ein schematisches Diagramm der bei der erfindungsgemäßen Vorrichtung verwendeten Steuerung; und
- Fig. 24: ein Impulsdiagramm zur Erläuterung der bei der erfingungsgemäßen Vorrichtung verwendeten Zeitgabe.

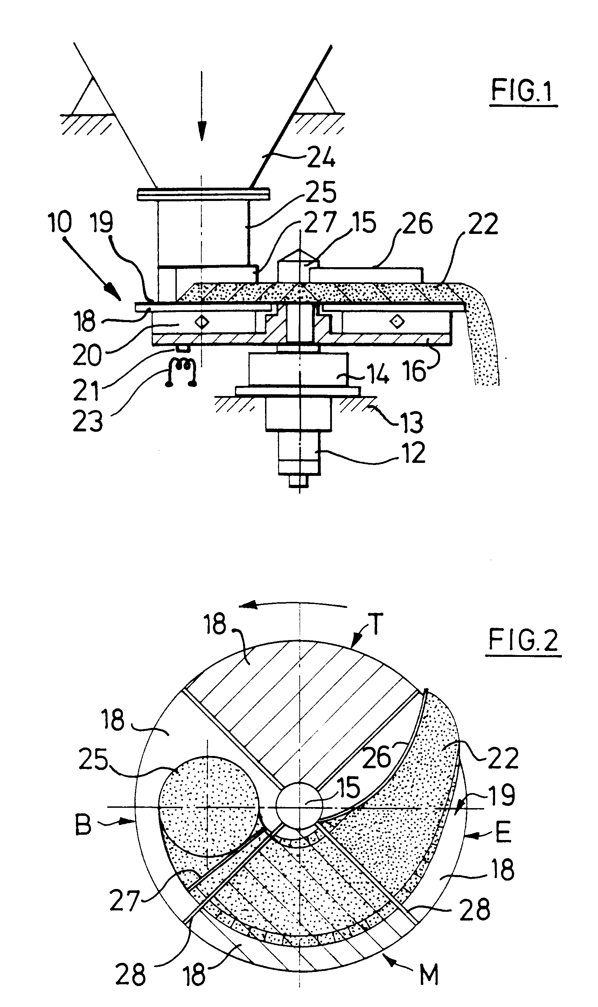

Die Fig. 1 und 2 zeigen eine erste Ausführungsform einer erfindungsgemäßen Sektordosiervorrichtung 10 mit einem bei der Ausführungsform in vier Sektoren 18 unterteilten Meßteller 19, der über noch im einzelnen zu beschreibende Kraftmeßvorrichtungen, nachstehend kurz Lastzellen 20 genannt, auf einem Drehteller 16 ruht, der von einem Motor 12, wahlweise über ein Getriebe 14 und eine Achse 15, mit einstellbarer bzw. geregelter Drehzahl angetrieben wird. Die Vorrichtung 10 ruht auf einer Basis 13, die ein Gestell oder dergleichen sein kann.

Einseitig (in Fig. 1, links) über dem Meßteller 19 öffnet sich ein Schacht 25, der von einem ebenfalls ortsfest angeordneten Behälter 24 mit fließfähigem Gut 22 beschickt wird. Hierdurch wird die Beschickungsstation B gebildet. Dem Schacht 25 diametral gegenüberliegend ist eine Entleerungsstation E in Form eines geraden oder aber vorzugsweise gekrümmt ausgebildeten Abstreifers 26 stationär angeordnet, der das auf den Meßteller 19 aufgebrachte Gut 22 vom Meßteller 19 abstreift, so daß der Meßteller geleert ist, bevor er wiederum unter den Schacht 25 gelangt.

Das erfindungsgemäße Prinzip ist insbesondere in Fig. 2 verdeutlicht. Wie zuvor erwähnt, besteht der Meßteller 19 beim Ausführungsbeispiel aus vier gleichen Sektoren 18, die unabhängig voneinander, etwa durch in noch später zu beschreibender Weise flexibel überbrückte Radialschlitze 28 getrennt, auf ihnen jeweils zugeordneten Lastzellen 20 aufgesetzt sind, so daß jeder Sektor 18 als eine Art selbständige Plattformwaage angesehen werden kann.

In der ersten der vier Phasen des Dosiervorgangs läuft ein Sektor 18 unter dem Schacht 25 durch, so daß er mit Gut 22 beladen wird. Das Gut 22 kann mittels einer ortsfesten, radial angeordneten Rakel 27 in seiner Höhe vergleichmäßigt und nach außen begrenzt werden.

Nach einer Drehung des Meßtellers 19 um 90° im Gegenuhrzeigersinn wurde der soeben beschickte Sektor 18 in die mit M bezeichnete Meßposition gebracht, in der er unbeeinflußt vom weiteren Beschicken des Meßtellers 19, nämlich des nächsten Sektors 18 (und auch von dem nachfolgenden Abwerfen des Guts 22 vom vorhergehenden Sektor) ist. Zu diesem Zeitpunkt wird (werden) nun kurzzeitig die unterhalb des Sektors 18 befindlichen Lastzelle(n) 20 aktiviert und die Masse des auf dem Sektor 18 befindlichen Guts 22 bestimmt. Dabei ist zu beachten, daß praktisch eine statische Massebestimmung vorgenommen wird, da sich der Sektor 18 über die Lastzelle(n) 20 auf dem Drehteller 16 abstützt.

In der dritten Phase des Massebestimmungsvorgangs gelangt der Sektor 18 nach einer weiteren Drehung um 90° in den die Entleerungsstation E bildenden Abwurfbereich (Fig. 2, rechts), in den das Gut 22 durch den Abstreifer 26 vom Meßteller 19 abgeworfen wird. Es ist zu beachten, wie vorstehend kurz erwähnt, daß das Abwerfen des Guts 22 von dem im Abwurfbereich befindlichen Sektor 18 keinen Einfluß auf die Massebestimmung für den nachfolgenden, nun sich im Meßbereich M befindlichen Sektor 18 hat.

In der vierten Phase des Massebestimmungsvorgangs gelangt schließlich der geleerte Sektor 18 in den Bereich T (Fig. 2, oben), in dem bevorzugt die unter ihm befindlichen Lastzellen 20 nochmals aktiviert werden und zwar zur Bestimmung des Leergewichtes (Tara) des dort befindlichen Sektors 18, der dann wieder in den Bereich des Schachtes 25 zur weiteren Beschickung einläuft.

Da auch das Leergewicht jedes Sektors - d. h. streng genommen die Masse des Sektors plus Restgut - laufend bestimmt wird, ist eine vollständige Entleerung nicht erforderlich. Es kann sogar absichtlich eine gewisse Schicht unterhalb des Abstreifers 26 durchlaufen, so daß sich kein Abrieb auf der Oberfläche des Meßtellers 19 ergibt.

In der vorstehenden Beschreibung wurden die vier Phasen des Massebestimmungsvorgangs für einen einzelnen Sektor 18 beschrieben. Selbstverständlich ist der Vorgang kontinuierlich, wobei sich nach einer Drehung von 90° im Gegenuhrzeigersinn ein jeweils anderer Sektor 18 in der jeweils nächsten Phase befindet. Es können auch mehr als vier Sektoren vorgesehen werden. Bei vollständiger Entleerung der Sektoren könnte auf die vierte Phase verzichtet werden.

Die jeweilige Drehwinkelposition des Meßtellers 19 wird laufend durch beliebige bekannte Mittel festgestellt, beispielsweise durch vier an der Unterseite des Drehteller 16 umfangsmäßig um 90° verteilt angeordnete Magnete 21, die an einer Induktionsspule 23 vorbeilaufen. Hierdurch läßt sich der Zeitpunkt feststellen, in dem sich der Meßteller 19 in der in Fig. 2 gezeigten Position (und jeder weiteren um 90° verdrehten Position) befindet. Zu diesem Zeitpunkt wird dann der von den Lastzellen 20 aufgenommene Wert im Meßbereich M und im Tarabereich T festgestellt und unter Differenzbildung der zugeordneten Werte die tatsächliche durch einen Sektor 18 geförderte Masse bestimmt.

Soll dabei in diskontinuierlicher Dosierung eine bestimmte Masse gefördert werden, dann ergibt sich diese durch Akkumulierung oder Addition der bestimmten Massewerte. Bei einer kontinuierlichen gravimetrischen Dosierung werden die bestimmten Meßwerte für die einzelnen Sektoren mit der Zeit bzw. der Drehzahl des Meßtellers 19 in Beziehung gesetzt. Hiervon kann dann ein Regelsignal für den Motor 12 abgeleitet werden, um einen Sollwert für den Durchsatz einzuhalten.

Eine Vereinfachung der Berechnung kann dadurch erzielt werden, daß laufend ein Mittelwert für das Tara- oder Leergewicht bei T gebildet wird und dieser Mittelwert von den jeweiligen Messungen im Bereich M bzw. entsprechend vervielfacht von der Gesamtmasse abgezogen wird.

Zusammenfassend läßt sich somit sagen, daß mittels einer verhältnismäßig einfachen Dosiervorrichtung sehr genau eine Massebestimmung bei der Dosierung von fließfähigem Gut erzielt werden kann, dessen Eigenschaften sich in weiten Grenzen variieren können. So läßt sich auf diese Weise auch sehr grobkörniges Gut und Gut mit verhältnismäßig schlechten Fließeigenschaften sehr gut dosieren.

Anhand der Fig. 1 und 2 wurden der prinzipielle Aufbau und die prinzipielle Arbeitsweise der erfindungsgemäßen Vorrichtung im einzelnen erläutert.

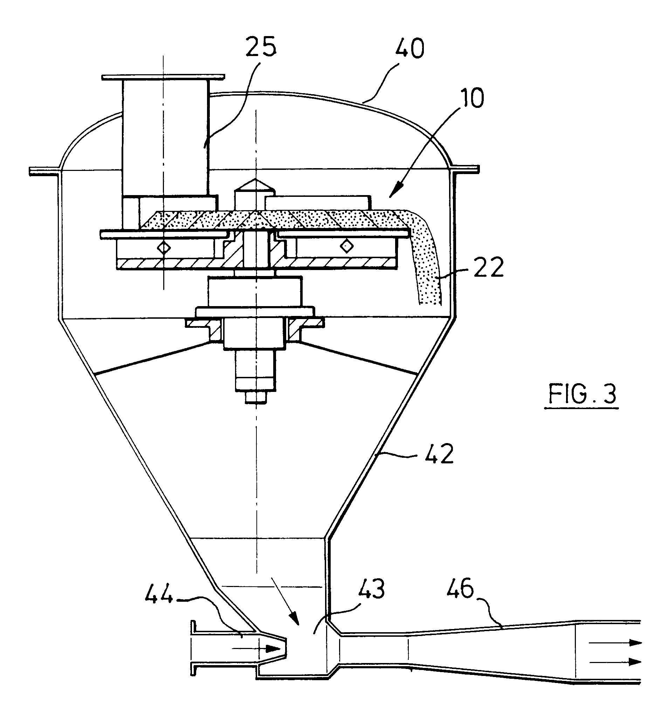

Die Fig. 3 bis 5 veranschaulichen Weiterbildungen, die bevorzugt im Zusammenhang mit der erfindungsgemäßen Vorrichtung nach Fig. 1 verwendet werden können.

So zeigt beispielsweise die Fig. 3 ein geschlossenes System, bei der die Sektordosiervorrichtung 10 in einem geschlossenen Gehäuse 40 untergebracht ist, das beispielsweise gleichzeitig einen Trichter 42 bildet, über den das von der Vorrichtung 10 abgeworfene Gut 22 in eine verengte Kammer 43 gelangt, aus der es mittels über eine Düse 44 zugeführter Druckluft pneumatisch über eine Ausgangsleitung 46 abgefördert werden kann.

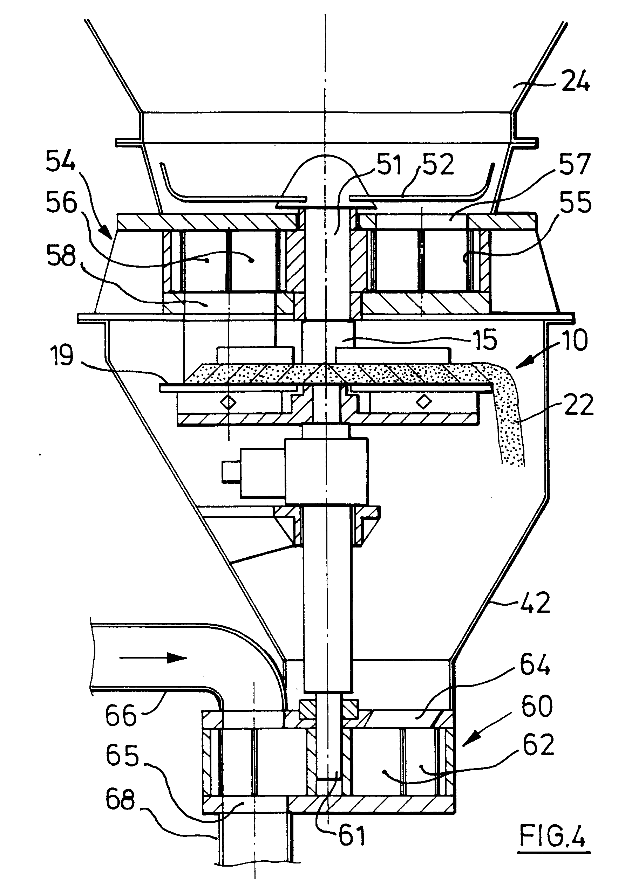

In Fig. 4 sind weitere Modifikationen und Weiterbildungen der erfindungsgemäßen Sektordosiervorrichtung 10 veranschaulicht, die die Beschickung der Vorrichtung einerseits und die Abförderung des dosierten Materials andererseits betreffen.

So besitzt die Welle 15 eine obere Verlängerung 51 zum Antrieb eines Zellenrades 55 einer Zellenradschleuse 54, wobei über eine obere Öffnung 57 im Gehäuse der Zellenradschleuse 54 Kammern 56 des Zellenrades 55 aus dem Behälter 24 gefüllt und nach Drehung um einen gewünschten Winkelbereich durch eine Entleerungsöffnung 58 an der Unterseite des Gehäuses auf den Meßteller 19 der Vorrichtung 10 entleert werden.

Zusätzlich oder alternativ zu der Zellenradschleuse 54 kann am oberen Ende der Verlängerung 51 der Welle 15 ein Rührer 52 angebracht sein, dessen Rotation Dombildungen im Behälter 24 verhindert und die Gutzufuhr zur Zellenradschleuse 54 und aus dieser auf den Meßteller 19 vergleichmäßigt.

Alternativ zu der pneumatischen Düsenabförderung des dosierten Gutes gemäß Fig. 3 ist bei der Vorrichtung nach Fig. 4 wiederum eine Zellenradschleuse 60 vorgesehen, bei der dosiertes Gut 22 aus dem Trichter 42 über eine obere Öffnung 64 in die Zellenradkammern 62 gelangt und aus diesen über eine Auslaßöffnung 65 an der Unterseite herausfällt, sofern es nicht durch über eine Druckleitung 66 angelegte Druckluft in eine pneumatische Abförderleitung 68 geblasen wird.

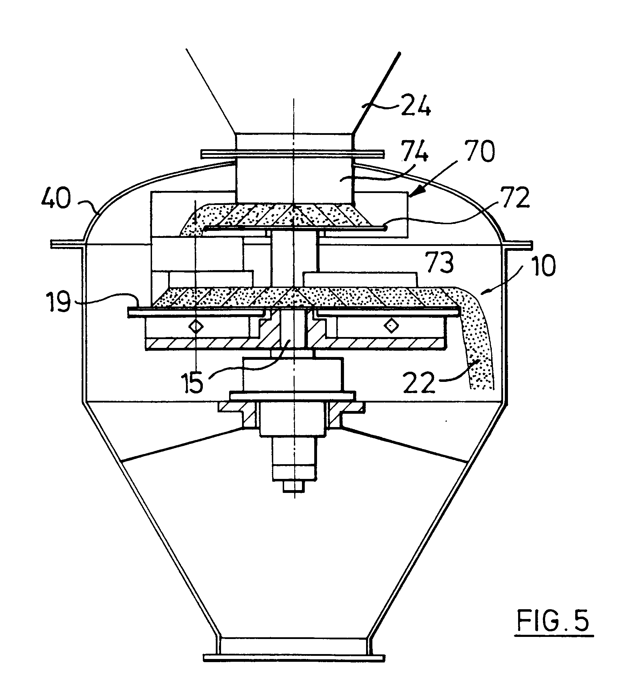

Fig. 5 zeigt eine andere bevorzugte Weiterbildung der erfindungsgemäßen Sektordosiervorrichtung 10, bei der zur Vergleichmäßigung der Zufuhr von Gut 22 zum Meßteller 19 ein Zufuhrdrehteller 72 über einen Wellenstummel 73 der Welle 15 angetrieben wird. Der sich so oberhalb des Meßtellers 19 drehende Drehteller 72 wird über einen Schacht 74 wiederum von dem Behälter 24 beschickt, so daß auch hier eine Vergleichmäßigung der Gutzufuhr zum Meßteller 19 erzielt wird.

Es ist ersichtlich, daß alle Zusatzvorrichtungen, die ggfs. modular anbaubar sind, von einer einzigen Welle angetrieben werden können.

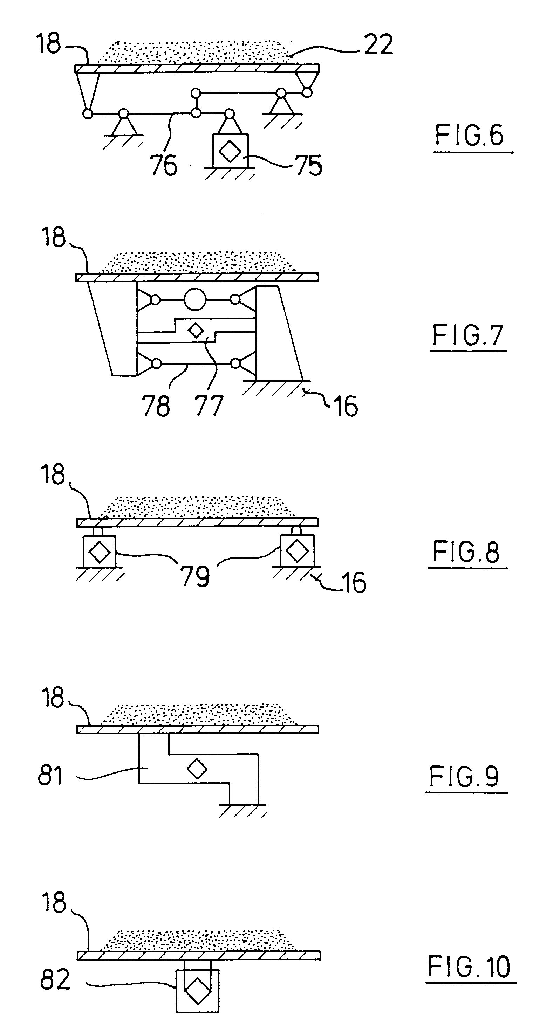

In den Fig. 6 bis 10 sind verschiedene Alternativen für die in den vorstehenden Figuren nur schematisch gezeigten Lastzellen 20 veranschaulicht. Im Prinzip können alle bei üblichen Plattformwaagen angewendeten Kraftmeßvorrichtungen zum Einsatz kommen, die eine Massebestimmung des ggfs. unregelmäßig auf einem Sektor 18 liegenden Gutes 22 gestatten.

So zeigt Fig. 6 eine übliche Hebelanordnung 76, die auf eine Lastzelle 75 wirkt.

Fig. 7 zeigt eine Kraftmeßanordnung mit einem Parallellenkersystem 78 und einem Scherkraftmesser 77, während in Fig. 8 die Lagerung des Sektors 18 auf zwei (oder drei oder mehr) Kraftmeßzellen 79 verdeutlicht ist.

Fig. 9 zeigt eine Ausführungsform, bei der der Sektor 18 auf einer (oder mehreren) Scherkraftmeßzelle(n) 81 ruht.

Bei der Ausführungsform nach Fig. 10 wird eine einzige elastomere Kraftmeßzelle 82 zur Abstützung des Sektors 18 verwendet, die besonders unempfindlich gegenüber seitlichen Kräften ist (vgl. z. B. EP-B1-0 205 509).

Bei den zuvor beschriebenen Ausführungsbeispielen wurde davon ausgegangen, daß die Sektoren 18 über entsprechende Lastzellen 20 auf dem Drehteller 16 angebracht sind.

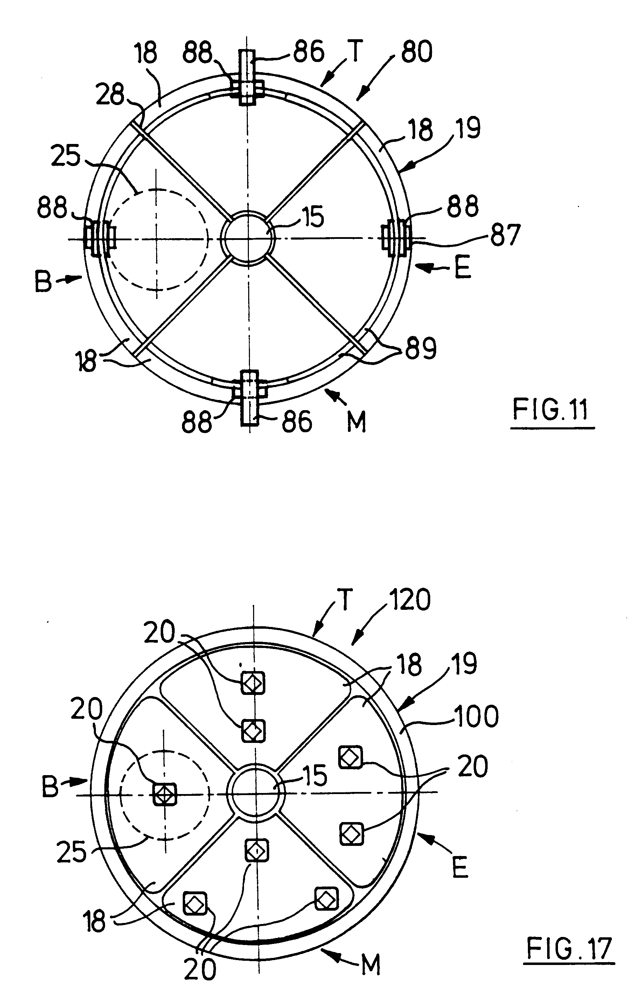

Die Fig. 11 bis 13, 15 und 16 veranschaulichen ein alternatives Ausführungsbeispiel, bei dem die Lastzellen 20 stationär angeordnet sind und lediglich der Meßteller 19 rotiert.

Die Fig. 11 bis 13 zeigen eine Sektordosiervorrichtung 80, bei der lediglich der Meßteller 19 rotiert und die Lastzellen 86 ortsfest angeordnet sind. Hierzu sind die einzelnen Sektoren 18 über z. B. Parallellenker 84 an der Welle 15 angebracht, wobei sich einer der Lenker in horizontaler Ebene aufgabelt, so daß jeder Sektor 18 in bekannter Weise in horizontaler Ausrichtung gehalten wird, in vertikaler Richtung jedoch frei beweglich ist.

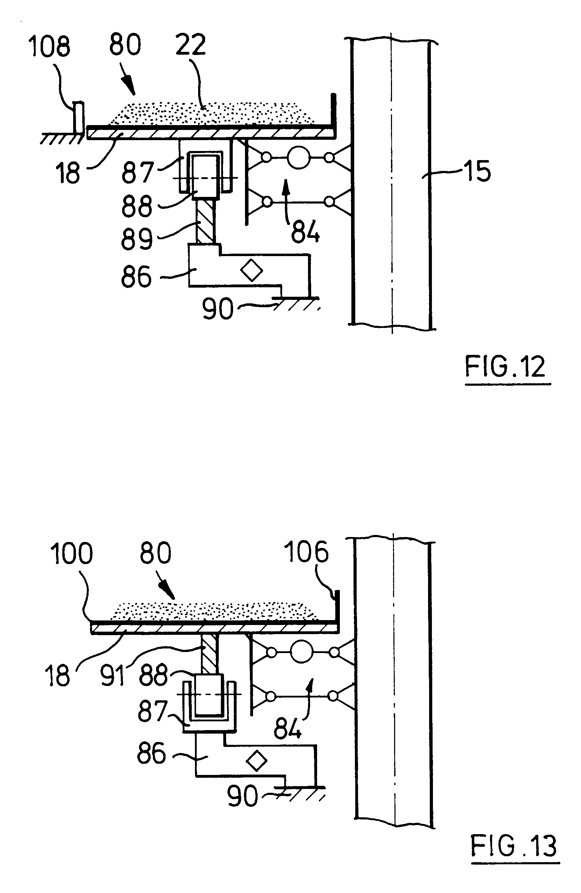

Wie in Fig. 11 lediglich schematisch skizziert und aus Fig. 12 deutlicher entnehmbar, ist an der Unterseite jedes Sektors 18 in einer Halterung 87 eine Laufrolle 88 mit umfangsmäßiger Ausrichtung angebracht, die auf einer kreisförmigen Schiene laufen, die in den Meßbereichen M und T durch Schienensegmente 89 unterbrochen ist, die sich auf einer beliebigen Kraftmeßeinrichtung, etwa einem Scherkraftgeber 86 abstützen, der ortsfest, etwa auf einem Gestell 90 angeordnet ist. In den übrigen beiden Bereichen B und E ist die Schiene ortsfest am Rahmen 90 abgestützt. Die Schienensegmente 89 sind dabei vorzugsweise kürzer als ein Sektor 18.

In Modifikation der Ausführungsform nach Fig. 12 läßt sich gemäß Fig. 13 die Laufrolle 88 auch an der Kraftmeßvorrichtung 86 anbringen, wobei dann der Sektorlänge entsprechende Schienenkreissegmente 91 an der Unterseite der Sektoren 18 entsprechend gegenüberliegend angeordnet sind.

Unter Rotation der Welle 15 werden somit die einzelnen Sektoren 18 nacheinander beim Durchlaufen durch die Meßbereiche M und T die dort angeordneten Kraftmeßvorrichtungen 86 entsprechend der Masse des Sektors 18 und des darauf beförderten Guts belasten, wobei, wie beim ersten Ausführungsbeispiel, im T-Bereich nur die Masse des abgeleerten Sektors 18 bestimmt wird.

Gemäß Fig. 11 ist für jeden Sektor 18 nur eine Laufrolle 88 vorgesehen. Eine gleichmäßigere Abstützung könnte dadurch erreicht werden, daß umfangsmäßig pro Sektor 18 mehrere, beispielsweise zwei Rollen angeordnet werden.

Bei den Ausführungsformen nach Fig. 12 und 13 sind die Laufrollen bzw. Schienen etwa mittig auf der Unterseite der Sektoren 18 angebracht.

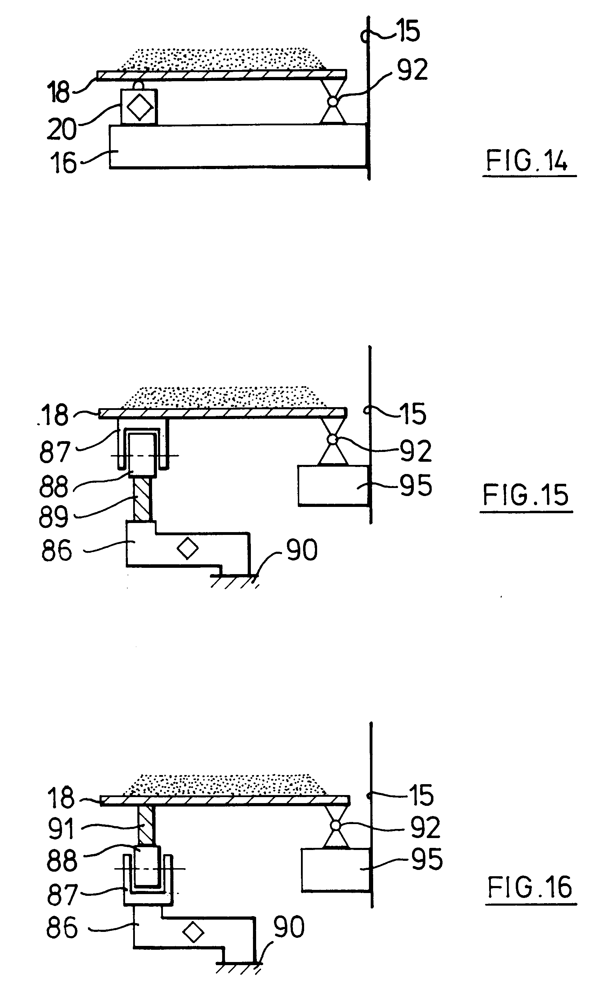

Wie Fig. 11 und die Fig. 15 und 16 zeigen, kann auch eine Abstützung in der Nähe des äußeren Randes erfolgen, wenn beispielsweise der Sektor 18 in der Nähe seines Innenrandes über einen Gelenkpunkt 92 auf einer auf der Welle 15 befestigten Platte 95 abgestützt wird. In diesem Zusammenhang sei darauf hingewiesen, daß eine derartige gelenkige Abstützung gemäß Fig. 14 auch im Zusammenhang mit der ersten Ausführungsform einsetzbar ist, wobei jeder Sektor 18 sich auf einer Lastzelle 20 abstützt, die in der Nähe des äußeren Randes des Drehtellers 16 aufgesetzt ist.

Es sei ferner darauf hingewiesen, daß bei den Ausführungsformen nach den Fig. 13 und 16 die Schiene 89 auch entfallen kann, so daß die Laufrollen 88 direkt auf der Unterseite der Sektoren 18 abrollen.

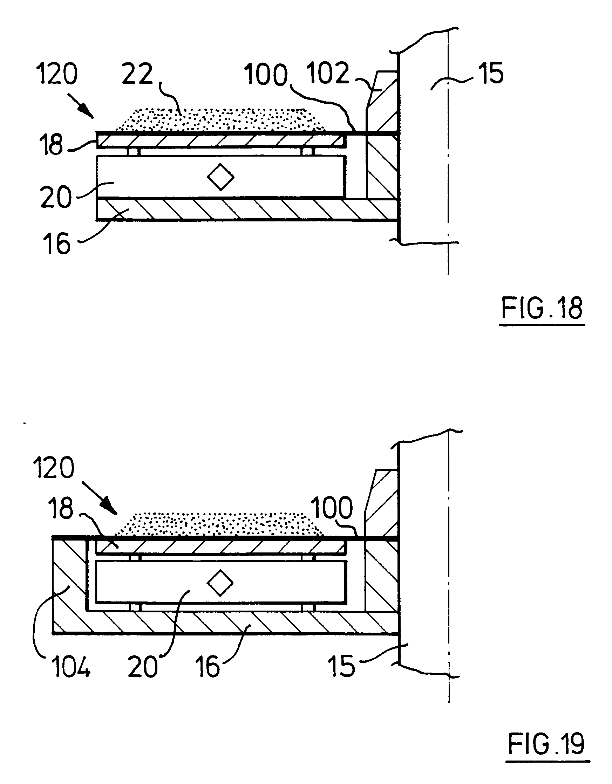

Die Fig. 17 bis 19 zeigen eine dritte prinzipielle Ausführungsform der Sektordosiervorrichtung 120, bei der auf der Oberseite des Meßtellers 19 eine sich über alle Sektoren 18 durchgehend erstreckende Gummidecke 100 oder ein entsprechend dünnes Stahlblech aufgebracht ist. Der innere Rand der Matte bzw. des Blechs 100 ist in einem Block 102 eingeklemmt, der am Umfang der Welle 15 befestigt ist. Hierdurch ergibt sich eine äußerst einfache radiale Fixierung der Sektoren 18, ohne daß die vertikaler Beweglichkeit wesentlich beeinflußt wird. Die Sektoren 18 können dann ohne besondere Maßnahmen auf der Kraftmeßvorrichtung 20, beispielsweise auf eine oder mehrere über die Sektoren 18 verteilte Meßzellen aufgesetzt sein. Fig. 17 zeigt unterschiedliche Möglichkeiten derartiger Anordnungen in den einzelnen Sektoren, wobei zweckmäßigerweise für alle Sektoren gleiche Anordnungen gewählt werden.

Wie aus Fig. 19 ersichtlich, kann der Drehteller 16 einen hochgezogenen Außenrand 104 aufweisen und die Matte bzw. das Blech 100 kann sich über diesen Rand erstrecken und an dessen Oberkante befestigt sein.

In den Fig. 12 und 13 ist gezeigt, daß auch ein die Sektoren 18 bedeckendes Blech 100 einen am Innenrand hochgezogenen Gürtel 106 aufweisen kann.

Wie in Fig. 12 angedeutet, besteht ferner eine weitere Möglichkeit, das Herabfallen von zu dosierendem Gut vor dem Abwurfbereich zu verhindern, die darin besteht, daß ortsfest im Beschickungs- und im Meßbereich B bzw. M ein ortsfestes Wandsegment 108 im Bereich des Außenumfangs des Meßtellers 19 angeordnet wird.

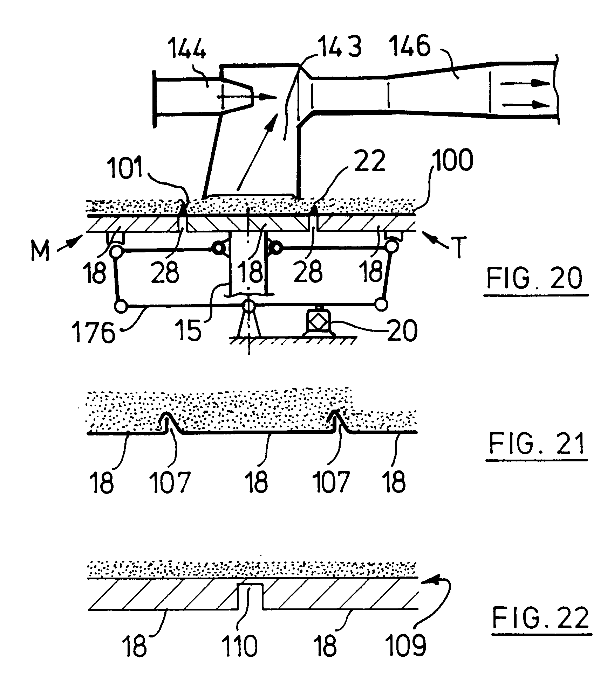

Es sei nun noch auf die Fig. 20 bis 22 Bezug genommen, die in einer Art Abwicklung den Übergang zwischen den einzelnen Sektoren 18 veranschaulichen.

So zeigt Fig. 20 die durchgehende Gummimatte 100, die die Schlitze 28 zwischen den einzelnen Sektoren überdeckt. Ist auf die Sektoren 18 eine Stahlplatte aufgelegt oder bestehen diese aus einer derartigen Stahlplatte, dann können die radialen Ränder der Sektoren 18 derart flexibel verbunden sein, daß zwar ein Eindringen von Gut in die Schlitze 28 verhindert wird, daß aber andererseits die voneinander unabhängige Vertikalbeweglichkeit der Sektoren 18 erhalten bleibt. Fig. 21 zeigt beispielsweise eine Einhakverbindung 107.

In einer weiteren Abwandlung gemäß Fig. 22 besteht der Meßteller 19 aus einer Stahlplatte 109, die an den Übergangsstellen zwischen den einzelnen Sektoren 18 durch Einschnitte derart in der Dicke reduziert ist, daß nur dünne, flexible Stege 110 übrigbleiben. In diesem Zusammenhang sei darauf hingewiesen, daß die im Rahmen der Erfindung verwendeten Meßzellen äußerst geringe Meßwege aufweisen, so daß die Stege 110 die Messung praktisch nicht beeinflussen.

Fig. 20 zeigt noch zwei weitere bevorzugte Modifikationen der erfindungsgemäßen Vorrichtung. Anstelle des Abstreifers 26 kann auch eine Absaugung des an der Entleerungsstation durchlaufenden Sektors 18 erfolgen. Über eine Düse 144 wird Druckluft in einen Saugraum 143 geleitet und das angesaugte Material über eine Abförderleitung 146 abgezogen, was zu einer praktisch vollkommenen Entleerung des Sektors führt, so daß ggfs. die Taramessung entfallen könnte. Bei dieser Anordnung könnten die einzelnen Sektoren 18 mit einer Umfangssegmentwand versehen sein. Auch die radialen Übergänge zwischen den Sektoren ließen sich mit Überlappungen 101 erhöht ausbilden. Die Absaugvorrichtung könnte auch zusätzlich zu dem Abstreifer 26 hinter diesen eingesetzt werden.
Andererseits zeigt die Fig. 20 aber eine vereinfachte Möglichkeit der mechanischen Differenzbildung über ein Doppellenkergestänge 176, wobei die jeweilige Masse in Sektor T von derjenigen in Sektor M an entgegengesetzten Punkten auf das Gestänge 176 einwirken und die Differenz (also Netto) durch die Kraftmeßzelle 20 bestimmt wird.

Bezüglich der elektronischen Steuerung und Auswertung der erfindungsgemäßen Vorrichtung wird auf die bereits genannte DE-C-32 17 406 hingewiesen. Das dort beschriebene Prinzip ist bei der erfindungsgemäßen Dosiervorrichtung in entsprechender Weise anwendbar, wobei lediglich eine Zeitgabe zur aufeinanderfolgenden, intermittierenden Aktivierung der Kraftmeßvorrichtungen 20 (Fig. 1) beim jeweiligen Durchlauf durch die Meßstation M bzw. die Tara-Station T eingefügt werden muß, damit der an der Tara-Station T für einen Sektor 18 festgestellte Tarawert von dem Bruttomeßwert abgezogen werden kann, der zuvor für den Sektor 18 an der Meßstation M gemessen wurde.

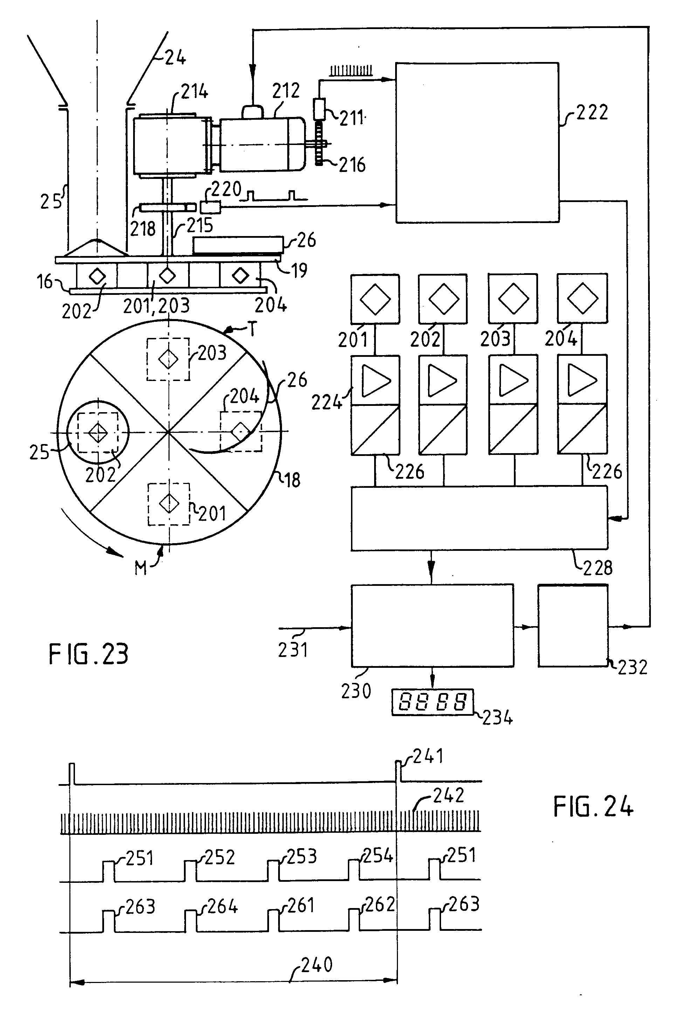

Lediglich beispielhaft sei nachstehend anhand der Figuren 23 und 24 der Aufbau und die Funktion einer derartigen Steuerung beschrieben.

In Fig. 23, links, ist der mechanische Aufbau der erfindungsgemäßen Dosiervorrichtung ähnlich demjenigen der Figuren 1 und 2 lediglich schematisch angedeutet, wobei in Abwandlung des ersten Ausführungsbeispiels der Drehteller 16 über eine sich nach oben erstreckende Welle 215 von einem Motor 212 über ein Getriebe 214 angetrieben wird. Die vier Sektoren 18 stützen sich über je eine Lastzelle 201, 202, 203 und 204 auf dem Drehteller 16 ab.

Fig. 23, rechts, zeigt die elektrische Schaltungsanordnung für die Lastzellen 201 bis 204, deren Ausgänge entsprechend über Verstärker 224 an Analog-Digitalkonverter 226 angeschlossen sind, deren Ausgänge über eine Auswahlschaltung 228 nach Art eines Multiplexers an die eigentliche Auswerteschaltung 230 angeschlossen sind, die der Schaltungsanordnung gemäß der genannten DE-C-32 17 406 prinzipiell entspricht.

Da die Lastzellen 20 (Fig. 1) bzw. 201 bis 204 (Fig. 23) mit dem Drehteller 16 rotieren, erfolgt die Signalabnahme von den Lastzellen in dem Fachmann allgemein bekannter Weise induktiv oder aber über eine nicht gezeigte Schleifringsektoren/Bürstenkombination, die an der Welle 215 angebracht ist. Bei der zweiten Ausführungsform der erfindungsgemäßen Dosiervorrichtung gemäß den Figuren 11 bis 17 sind die Lastzellen 20 stationär angeordnet, so daß eine direkte Leitungsverbindung möglich ist.

Bei der in der Fig. 23 gezeigten Schaltungsanordnung wird die Zeitgabe einmal mittels einer auf der Welle 215 befestigten Taktscheibe 218 erreicht, die mit einem Zahn versehen ist, bei dessen Vorbeilauf an einem Sensor 220 pro Umdrehung 240 (Fig. 24) ein Impuls 241 (Fig. 24) erzeugt wird, der einer Zeitgabeschaltung 222 zugeführt wird.

Auf der Welle des Motors 212 sitzt ferner ein Zahnrad 216, von dem ein weiterer Sensor 211 beispielsweise 1000 Impulse 242 (Fig. 24) pro Umdrehung der Welle 215 abnimmt.

Auf der Basis der Impulse 241 und 242 werden durch die Zeitgabeschaltung 222 an die Auswahlschaltung 228 Impulse 251 bis 254 angelegt, die zur Durchschaltung der Ausgangssignale der Lastzellen 201 bis 204 zu einem Zeitpunkt dienen, zu dem der jeweilige Sektor 18 sich an der Meßstation M (vgl. auch Fig. 2) befindet. Den Auswahlimpulsen 251 bis 254 analoge Impulse 263,264,261,262 aktivieren nacheinander mit einer Versetzung um 90° jeweils diejenige der Lastzellen 201 bis 204, die sich an der Tarastation T befindet.

In der Auswerteschaltung 230 wird laufend der an der Tarastation T gemessene Tarawert von dem zuvor für den entsprechenden Sektor an der Meßstation M gemessenen Bruttowert abgezogen und der sich ergebende Nettowert, d. h. die Masse des auf dem entsprechenden Sektor geförderten Materials zur weiteren Auswertung zur Verfügung gestellt, wie sie in der genannten DE-C-32 17 406 im einzelnen beschrieben ist. Insbesondere kann über Leitung 231 ein Sollwert für den Materialdurchsatz angelegt werden, über eine Anzeige 234 kann der jeweilige Istwert angezeigt werden und über eine Regelung 232 kann die Drehzahl des Motors 212 entsprechend der Abweichung zwischen Sollwert und Istwert geregelt werden.

Mittels der Vielzahl von Impulsen 242 ist auch eine Mehrfachmessung für jeden Sektor und jede Position möglich. Anstelle eines Impulses 241 pro Umdrehung können auch vier Impulse durch entsprechende Zähne an der Taktscheibe 218 erzeugt werden.

Abschließend sei darauf hingewiesen, daß die verschiedenen Modifikationen der einzelnen Ausführungsbeispiele zum großen Teil entsprechend bei den anderen Ausführungsbeispielen angewandt werden können, soweit dies vom Fachmann als zweckdienlich erachtet wird. Dies gilt insbesondere für die Zufuhr und Abförderung, wie sie im Zusammenhang mit dem ersten Ausführungsbeispiel ausführlich erläutert wurde.

## Patentansprüche

1. Gravimetrische Dosiervorrichtung (10; 80; 120) für fließfähiges Gut, mit einem um eine Vertikalachse rotierenden Rotor, einer Beschickungsstation (B) zur Zuführung von Gut zu dem Rotor, einer gegenüber der Beschickungsstation (B) versetzten Entleerungsstation (E) und Kraftmeßvorrichtungen (20), mit denen die Masse des jeweils vom Rotor über eine zwischen der Beschickungsstation (B) und der Entleerungsstation (E) befindliche Meßstrecke (M) geförderten Guts bestimmt wird,
dadurch gekennzeichnet, daß
der Rotor einen Meßteller (19) aufweist, der in mindestens drei unabhängig voneinander zumindest geringfügig vertikal bewegbare, vorzugsweise gleich große Sektoren (18) unterteilt ist, und daß die Kraftmeßvorrichtungen (20) unterhalb der Sektoren (18) angeordnet sind und die Masse des auf jeweils einem Sektor (18) befindlichen Gutes beim Vorbeilauf eines Sektors (18) bestimmen.

2. Vorrichtung nach Anspruch 1, dadurch gekennzeichnet, daß mindestens vier Sektoren (18) vorgesehen sind und daß zwischen Entleerungsstation (E) und Beschickungsstation (B) eine Tara- oder Sektorleergewichtsmeßstrecke (T) angeordnet ist, wobei bei vier Sektoren (18) die Beschickungsstation (B), die (Brutto-)Meßstrecke (M), die Entleerungsstation (E) und die Tarameßstrecke (T) um jeweils 90° versetzt sind.

3. Vorrichtung nach Anspruch 1 oder 2, dadurch gekennzeichnet, daß an der Entleerungsstation (E) über dem Meßteller (19) ein Abstreifer (26) oder eine Absaugvorrichtung (143, 144, 146) und ggfs. weitere Abfördermittel (44, 46; 60, 68) vorgesehen sind.

4. Vorrichtung nach einem der vorhergehenden Ansprüche, dadurch gekennzeichnet, daß der Rotor einen Drehteller (16) aufweist, der von einem Motor (12) über eine Achse (15) angetrieben wird und auf dem über die Kraftmeßvorrichtungen (20) die einzelnen Sektoren (18) abgestützt sind, wobei die Abstützung der Sektoren (18) auf den Kraftmeßvorrichtungen (20; 55; 77; 79; 80; 82; 86; 91) etwa nach Art einer Plattformwaage erfolgen kann.

5. Vorrichtung nach Anspruch 1, 2 oder 3, dadurch gekennzeichnet, daß bei ortsfest angeordneten Kraftmeßvorrichtungen (86) der jeweils darüber vorbeilaufende Sektor (18) sich zur Brutto-(und ggfs. Tara)Massebestimmung, vorzugsweise über Rollen (88) darauf abstützt.

6. Vorrichtung nach einem der vorhergehenden Ansprüche, dadurch gekennzeichnet, daß jeder Sektor (18) bzw. für eine Differenzbildung jeweils zwei diametral gegenüberliegende Sektoren (18) über eine parallele Doppellenkeranordnung (84;176) an der Welle (15) befestigt ist (sind).

7. Vorrichtung nach einem der vorhergehenden Ansprüche, dadurch gekennzeichnet, daß die unabhängige Vertikalbeweglichkeit der Sektoren (18) zueinander durch eine elastische oder eine hakenförmige Verbindung (100; 107; 110) zwischen ihnen gebildet wird oder der Meßteller (19) und damit die Sektoren (18) von einer Gummimatte oder einem Blech (100) mit radialen Verdünnungen (110) bedeckt ist bzw. sind.

8. Vorrichtung nach einem der vorhergehenden Ansprüche, gekennzeichnet durch ein die Vorrichtung (10) umgebendes Gehäuse (40).

9. Vorrichtung nach einem der vorhergehenden Ansprüche, dadurch gekennzeichnet, daß an der Beschickungsstation (B) eine Zellradschleuse (54) oder Bewegungsvorrichtungen (51, 52) zur Vergleichmäßigung des Gutzuflusses angeordnet sind.

10. Vorrichtung nach einem der vorhergehenden Ansprüche, dadurch gekennzeichnet, daß an der Entleerungsstation zur beschleunigten Abförderung des dosierten Gutes pneumatische Vorrichtungen (44, 46; 66, 68) und/oder eine Zellradschleuse (60) angeordnet ist.

11. Vorrichtung nach einem der Ansprüche 1 bis 9, dadurch gekennzeichnet, daß zur Vergleichmäßigung des Gutzuflusses oberhalb des Meßtellers (19) an der Beschickungsstation (B) eine weitere Verteiltellervorrichtung (70) angeordnet ist, die über einen Schacht (74) beschickt wird.

12. Verfahren zum Betrieb einer Vorrichtung nach einem der vorhergehenden Ansprüche, dadurch gekennzeichnet, daß unter laufender Feststellung der Drehwinkelposition des rotierenden Meßtellers (19) die Kraftmeßvorrichtung(en) (20; 55; 77; 79; 80; 82; 86; 91) immer dann für eine Massebestimmung aktiviert wird bzw. werden, wenn sich ein Sektor (18) innerhalb der Meßstrecke (M) befindet.

13. Verfahren nach Anspruch 12, dadurch gekennzeichnet, daß nach Entleerung eines Sektors (18) die Masse des leeren Sektors (18) bestimmt und von der über der Meßstrecke (M), d. h. vor Entleerung des Sektors (18) bestimmten Masse abgezogen oder nur eine Taramittelwertbildung vorgenommen und bei der Massebestimmung berücksichtigt wird, wobei ggfs. auch die jeweils bestimmten Massen bzw. Massendifferenzen akkumuliert werden können.

14. Verfahren nach Anspruch 12 oder 13, dadurch gekennzeichnet, daß laufend der Ist-Durchsatz bestimmt und zur Regelung der Drehzahl des Meßtellers und ggfs. der Eingangs- bzw. Ausgangschleuse(n) herangezogen wird.

## Claims

1. A gravimetric dozing device (10; 80; 120) for pourable material, including a rotor rotating about a vertical axis, a charging station (B) for feeding material to said rotor, a discharging station (E) being offset opposite to said charging station (B), and force measuring devices (20) by means of which there is determined the mass of material respectively fed by said rotor via a measuring section (M) provided between said charging station (B) and said discharging station (E),
characterized in that
the rotor includes a measuring plate (19) subdivided in at least three sections (18), preferably of equal size and adapted to be vertically movable independently from each other at least to a small extent, and that the force measuring devices (20) are arranged below said sections (18) and determine the respective mass of material provided on a section (18) during the passing-by of a section (18).

2. The device of claim 1, characterized in that there are provided at least four sections (18) and a tare or section deadweight measuring section (T) is located between said discharging station (E) and said charging station (B), wherein said charging station (B), said (gross) measuring section (M), said discharging station (E) and said tare measuring section (T) each are offset by 90° when four of said sections (18) are provided.

3. The device of claim 1 or 2, characterized in that a stripper (26) or a suction means (143, 144, 146) and, if desired, further discharging means (44, 46; 60, 68) are provided above said measuring plate (19) at said discharging station (E).

4. The device of any of the preceding claims, characterized in that the rotor comprises a rotary disk (16) driven by a motor (12) via a shaft (15) and supporting each of said sections (18) via said force measuring devices (20), wherein the support of said sections (18) on said force measuring devices (20; 55; 77; 79; 80; 82; 86; 91) may be performed similar to that of a platform weighing device.

5. The device of claim 1, 2 or 3, characterized in that, in the case of fixedly arranged force measuring devices (86), each section (18) passing thereabove supports thereon, preferably via rolls (88), for performing the gross (and, if desired, the tare) mass determination.

6. The device of any of the preceding claims, characterized in that each section (18) or, in the case of balancing, respectively, two diametrically opposing sections (18) each is (are) secured to said shaft (15) via a parallel double guide arrangement (84; 176).

7. The device of any of the preceding claims, characterized in that the independent vertical mobility of said sections (18) with respect to each other is enabled by a resilient or a hooked connection (100; 107; 110) therebetween or that said measuring plate (19) and thus said sections (18) is or are, respectively, covered by a rubber mat or a sheet metal (100) having radial recesses (110).

8. The device of any of the preceding claims, characterized by a housing (40) enclosing said device (10).

9. The device of any of the preceding claims, characterized in that the charging station (B) has arranged thereto a bucket wheel gate (54) or working gears (51, 52) for equalizing the material flow.

10. The device of any of the preceding claims, characterized in that the discharging station is provided with pneumatic means (44, 46; 66, 68) and/or a bucket wheel gate (60) for an accelerated discharge of the dosed material.

11. The device of any of claims 1 to 9, characterized in that a further distribution plate means (70) charged via a tube (74) is arranged above said measuring plate (19) at said charging station (B) to equalize the material flow.

12. A method for operating a device according to any of the preceding claims, characterized in that the position of the angle of rotation of the rotating measuring plate (19) is permanently determined and said force measuring device(s) (20; 55; 77; 79; 80; 82; 86; 91) is or are, respectively, always activited to determine any mass, when a section (18) is present within said measuring section (M).

13. The method of claim 12, characterized in that the mass of an empty section (18) is determined upon discharge of said section (18) and is subtracted from the mass determined on the measuring section (M), i. e. before discharging said section (18) or that only a tare average value thereof is determined and considered during mass determination, wherein also the individually determined masses or mass differences, respectively, may be accumulated, if desired.

14. The method of claim 12 or 13, characterized in that the actual weight rate is permanently determined and used to control the rotational speed of the measuring plate and, if desired, of the entrance or exit gate(s), respectively.

## Revendications

1. Dispositif de dosage gravimétrique (10 ; 80 ; 120) de matériau en vrac, avec un rotor tournant autour d'un axe vertical, un poste de chargement (B) pour apporter du matériau au rotor, un poste de vidage (E) décalé par rapport au poste de chargement (B), et des dispositifs dynamométriques (20) avec lesquels on détermine la masse du matériau chaque fois transporté par le rotor sur une section de mesure (M) qui se trouve entre le poste de chargement (B) et le poste de vidage (E), **caractérisé** en ce que le rotor présente un disque de mesure (19) qui est divisé en au moins trois secteurs (18), de préférence de même grandeur, mobiles indépendamment les uns des autres au moins légèrement en direction verticale, et en ce que les dispositifs dynamométriques (20) sont disposés en dessous des secteurs (18) et déterminent la masse du matériau qui se trouve sur un secteur respectif (18) lors du défilement d'un secteur (18).

2. Dispositif selon la revendication 1, **caractérisé** en ce qu'au moins quatre secteurs (18) sont prévus, et en ce qu'une section (T) de mesure du poids à vide du secteur, ou section de mesure de tare, est disposée entre le poste de vidage (E) et le poste de chargement (B), le poste de chargement (B), la section de mesure (M) (section de mesure du poids brut), le poste de vidage (E) et la section de mesure de tare (T) étant, en présence de quatre secteurs (18), respectivement décalés de 90°.

3. Dispositif selon la revendication 1 ou 2, **caractérisé** en ce que sont prévus au poste de vidage (E), au-dessus du disque de mesure (19), un racleur (26) ou un dispositif d'aspiration (143, 144, 146) et éventuellement des moyens d'évacuation supplémentaires (44, 46 ; 60, 68).

4. Dispositif selon l'une des revendications précédentes, **caractérisé** en ce que le rotor présente un plateau tournant (16), qui est entraîné par un moteur (12) par l'intermédiaire d'un arbre (15) et sur lequel les différents secteurs (18) s'appuient par l'intermédiaire des dispositifs dynamométriques (20), l'appui des secteurs (18) sur les dispositifs dynamométriques (20 ; 55 ; 77 ; 79 ; 80 ; 82 ; 86 ; 91) pouvant s'effectuer environ à la manière d'un pont à bascule.

5. Dispositif selon la revendication 1, 2 ou 3, **caractérisé** en ce qu'en présence de dispositifs dynamométriques (86) disposés stationnairement, le secteur respectif (18) qui défile au-dessus de ces dispositifs s'appuie sur eux, en vue de la détermination de la masse brute (et éventuellement de la tare), de préférence par l'intermédiaire de rouleaux (88).

6. Dispositif selon l'une des revendications précédentes, **caractérisé** en ce que chaque secteur (18) ou, pour une formation de différence, deux secteurs respectifs (18) diamétralement opposés, est ou sont fixés à l'arbre (15) par l'intermédiaire d'un ensemble de bielles jumelées parallèles (84 ; 176).

7. Dispositif selon l'une des revendications précédentes, **caractérisé** en ce que la mobilité verticale indépendante des secteurs (18) les uns par rapport aux autres est obtenue par une liaison élastique ou en forme de crochet (100 ; 107 ; 110) entre eux, ou bien le disque de mesure (19) et donc les secteurs (18) est ou sont recouverts par un tapis de caoutchouc ou par une tôle (100) à amincissements radiaux (110).

8. Dispositif selon l'une des revendications précédentes, **caractérisé** par un carter (40) entourant le dispositif (10).

9. Dispositif selon l'une des revendications précédentes, **caractérisé** en ce qu'un sas à roue cellulaire (54) ou des dispositifs de déplacement (51, 52) sont disposés au poste de chargement (B) pour uniformiser l'apport de matériau.

10. Dispositif selon l'une des revendications précédentes, **caractérisé** en ce que des dispositifs pneumatiques (44, 46 ; 66, 68) et/ou un sas à roue cellulaire (60) sont disposés au poste de vidage pour accélérer l'évacuation du matériau dosé.

11. Dispositif selon l'une des revendications 1 à 9, **caractérisé** en ce qu'un dispositif supplémentaire à plateau distributeur (70), qui est alimenté par un puits (74), est disposé au-dessus du disque de mesure (19) au poste de chargement (B) pour uniformiser l'apport de matériau.

12. Procédé pour l'exploitation d'un dispositif selon l'une des revendications précédentes, **caractérisé** en ce qu'en reconnaissant en continu la position d'angle de rotation du disque de mesure rotatif (19), le ou les dispositifs dynamométriques (20 ; 55 ; 77 ; 79 ; 80 ; 82 ; 86 ; 91) est ou sont toujours activés pour une détermination de masse lorsqu'un secteur (18) se trouve dans la section de mesure (M).

13. Procédé selon la revendication 12, **caractérisé** en ce qu'à la suite du vidage d'un secteur (18), on détermine la masse du secteur vide (18) et on la soustrait de la masse déterminée sur la section de mesure (M), c'est-à-dire avant le vidage du secteur (18), ou bien on entreprend seulement une formation de valeur moyenne de tare et on la prend en compte lors de la détermination de la masse, les masses ou masses différentielles chaque fois déterminées pouvant aussi être éventuellement accumulées.

14. Procédé selon la revendication 12 ou 13, **caractérisé** en ce qu'on détermine en continu le débit de passage effectif et on s'en sert pour réguler la vitesse de rotation du disque de mesure et, le cas échéant du sas d'entrée et/ou du sas de sortie.
